# EUROPEAN PATENT APPLICATION

(11) **EP 1 976 266 A1**
(43) Date of publication of application: **01.10.2008**
(21) Application number: 08102505.8
(22) Date of filing: 11.03.2008
(51) Int. Cl.: H04N 5/00, H04N 7/14

(54) **Information communication terminal**

(30) Priority: 27.03.2007 JP 2007080742
(71) Applicant: NEC CORPORATION, Tokyo (JP)
(72) Inventor: Yamada, Hiroshi, c/o NEC Corporation, Tokyo (JP)
(74) Representative: Betten & Resch

(57) **Abstract**

An information communication terminal has a download function portion (20) for downloading a moving image as a downloaded moving image, a size acquiring function portion (70) for acquiring vertical and horizontal sizes of the downloaded moving image, a controlling portion (40) for determining whether or not the downloaded moving image is subjected to vertical/horizontal conversion on the basis of the vertical and the horizontal sizes which have been acquired, a vertical/horizontal converting function portion (80) for vertical/horizontal converting the downloaded moving image to obtain a vertical/horizontal converted moving image in case where it is determined to carry out the vertical/horizontal conversion, and a moving image display function portion (90) for displaying the vertical/horizontal converted moving image on a display unit (60) in case where it is determined to carry out the vertical/horizontal conversion and displaying the downloaded moving image on the display unit (60) in case where it is determined not to carry out the vertical/horizontal conversion.

## Description

This application is based upon and claims the benefit of priority from Japanese patent application No. 2007-080742, filed on March 27, 2007, the disclosure of which is incorporated herein in its entirety by reference.

### Background of the Invention:

This invention relates to an information communication terminal, such as a mobile phone.

In recent years, display of a moving image supplied by broadcasting or streaming is realized by a compact information communication terminal, such as a mobile phone.

In the mobile phone, a display unit having a vertical length longer than a horizontal length is widely used. On the other hand, the moving image supplied by broadcasting or streaming often has a horizontal length longer than a vertical length.

Japanese Unexamined Patent Application Publication (JP-A) No. 2003-114668 (Patent Document 1) discloses a display device of a television or the like. As shown in Figs. 1A through 1C and Figs. 2A and 2B in the publication, the display device has a display part having a horizontal length longer than a vertical length. When an instruction to display a two-split screen view is issued through a remote controller, a touch panel, and so on, the display part is rotated by 90 degrees with respect to a normal state and divided into two sections each of which has a horizontal length longer than a vertical length. On each of the two sections, a video is displayed (see paragraphs [0010] and [0011] in the publication).

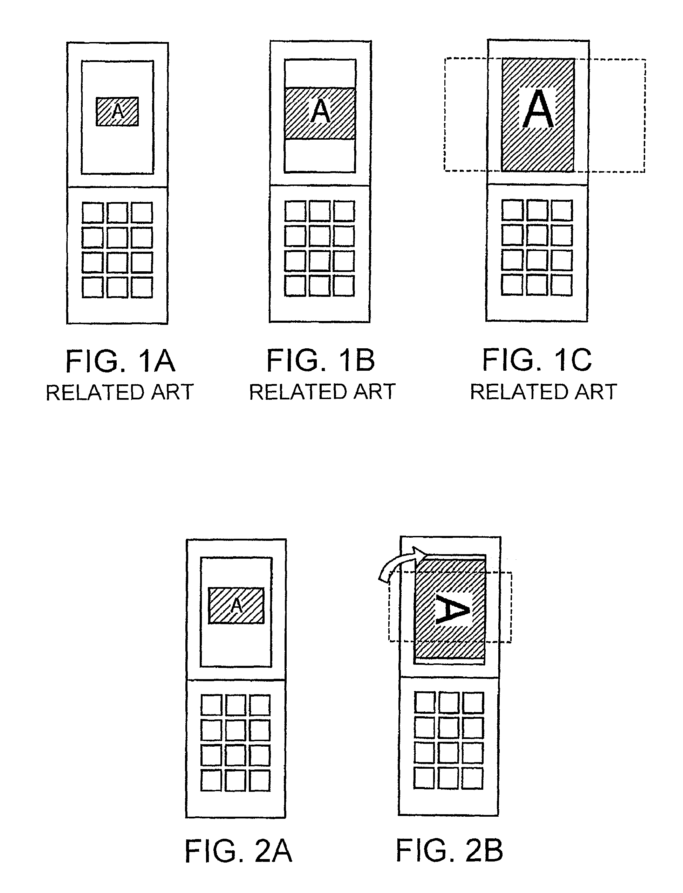

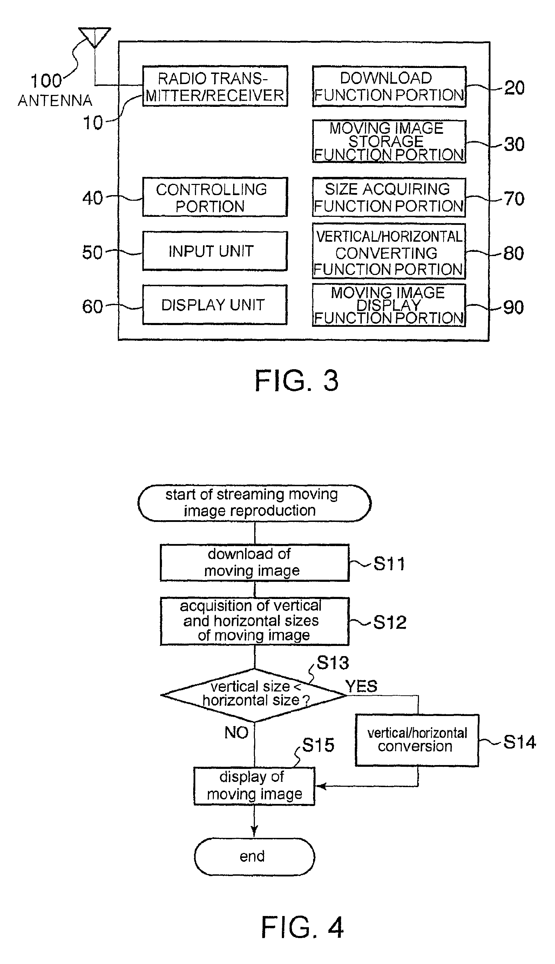

Japanese Unexamined Patent Application Publication (JP-A) No. 2006-166248 (Patent Document 2) (corresponding to US2006/140621A1) discloses a digital camera in which, in a photographing or taking mode, a touch panel is displayed in a lower part of a display screen and a picked-up image is displayed in an upper part of the display screen (see abstract and Figs. 2A and 2B in the publication). In the digital camera, in a reproduction mode, a display position or orientation of the picked-up image is rotated by 90 degrees and the picked-up image is displayed on the whole area of the display screen (see abstract and Fig. 3 in the publication).

Japanese Unexamined Patent Application Publication (JP-A) No. S62-173509 (Patent Document 3) discloses an image display device. As shown in Fig. 1 (page 3, upper left column, line 16 to upper right column, line 2) in the publication, the image display device includes an image memory 16 having an area 161 and another area 162. Generally, vertically-long image data in the area 161 in the image memory 16 is displayed. If necessary, the vertically-long image data is converted into horizontally-long image data through a rotation circuit 14 or the like. The horizontally-long image data is sent to the area 162 in the image memory 16 to be displayed. Thus, as shown in Fig. 4 (page 3, upper right column, lines 2 to 7) in the publication, even if a CRT 21 is changed in position from a state (a) into a horizontal type, i.e. a state (b), a normal and easily viewable display can be obtained by switching a display area in the image memory 16 from the area 161 into the area 162.

### Summary of the Invention:

Referring to Fig. 1A, a related information processing terminal has a vertically-long display unit on which a horizontally-long moving image (depicted by A in the figure) is displayed. Specifically, the information processing terminal shown in the figure is a mobile phone. Fig. 1A shows a normal display mode. As shown in Fig. 1B, in case where the whole moving image is displayed on the display unit in a maximum-size (or maximized) display mode, the moving image is not displayed in a sufficiently large size. As shown in Fig. 1C, in case where a center portion of the moving image is displayed on the display unit in a sufficiently large size, both side portions of the moving image are not displayed so that a displayed image on a display screen is cut or interrupted" Thus, the related information processing terminal is disadvantageous.

It is therefore an exemplary object of this invention to provide an information processing terminal having a vertically-long display unit capable of displaying, under a situation where a vertically-long moving image and a horizontally-long moving image are mixed, the horizontally-long moving image in a maximum-size display mode in a good condition (i.e., in a sufficiently large size without interruption of a displayed image).

According to an exemplary aspect of this invention, there is provided an information processing terminal having a display unit, the information communication terminal comprising:
downloading means for downloading a moving image as a downloaded moving image;
size acquiring means for acquiring vertical and horizontal sizes of the downloaded moving image;
determining means for determining whether or not the downloaded moving image is to be subjected to vertical/horizontal conversion on the basis of the vertical and the horizontal sizes acquired by the size acquiring means;
vertical/horizontal conversion means for carrying out the vertical/horizontal conversion of the downloaded moving image to obtain a vertical/horizontal converted image in case where the determining means determines that the vertical/horizontal conversion is to be carried out; and
moving image display means for displaying the vertical/horizontal converted image on the display unit in case where the determining means determines that the vertical/horizontal conversion is to be carried out and displaying the downloaded moving image on the display unit in case where the determining means determines that the vertical/horizontal conversion is not to be carried out.

Patent Document 1 assumes that the display part itself is rotatable and discloses no vertical/horizontal conversion of a video. Specifically, Patent Document 1 does not disclose "downloading means for downloading a moving image", "size acquiring means for acquiring vertical and horizontal sizes of a downloaded moving image", "determining means for determining whether or not vertical/horizontal conversion of the downloaded moving image is to be carried out on the basis of the vertical and the horizontal sizes acquired by the size acquiring means", "vertical/horizontal conversion means for carrying out the vertical/horizontal conversion of the downloaded moving image to obtain a vertical/horizontal converted moving image in case where the determining means determines to carry out the vertical/horizontal conversion", and "moving image display means for displaying the vertical/horizontal converted moving image on the display unit in case where the determining means determines to carry out the vertical/horizontal conversion" described in the above-mentioned exemplary aspect of this invention.

Patent Document 2 discloses that, in the reproduction mode, the display position or orientation of the picked-up image is rotated by 90 degrees and the picked-up image is displayed on the whole area of the display screen. Patent Document 3 discloses that the vertically-long image data is converted into the horizontally-long image data through the rotation circuit or the like. However, neither Patent Document 2 nor Patent Document 3 disclose "downloading means for downloading a moving image", "size acquiring means for acquiring vertical and horizontal sizes of a downloaded moving image", and "determining means for determining whether or not vertical/horizontal conversion of the downloaded moving image is to be carried out on the basis of the vertical and the horizontal sizes acquired by the size acquiring means" described in the above-mentioned exemplary aspect of this invention.

According to the exemplary aspect of this invention, it is possible to provide an information processing terminal having a vertically-long display unit capable of displaying, under a situation where a vertically-long moving image and a horizontally-long moving image are mixed, the horizontally-long moving image in a maximum-size display mode in a good condition (i,.e., in a sufficiently large size without interruption of a displayed image).

### Brief Description of the Drawing:

Figs. 1A, 1B, and 1C are views for describing a normal display mode and a maximum-size display mode of a related information processing terminal;
Figs. 2A and 2B are views for describing a normal display mode and a maximum-size display mode of an information processing terminal according to an exemplary embodiment of this invention;
Fig. 3 is a block diagram of an information communication terminal according to a first example of this invention;
Fig. 4 is a flow chart for describing an operation of the information communication terminal shown in Fig. 3;
Fig. 5 is a block diagram of an information communication terminal according to a second example of this invention;
Fig. 6 is a view for describing a play list in the information communication terminal shown in Fig. 5; and
Fig. 7 is a flow chart for describing an operation of the information communication terminal shown in Fig. 5.

### Description of the Exemplary Embodiments:

Next, exemplary embodiments of this invention and examples of this invention will be described with reference to the drawing.

Referring to Fig. 2A, an information processing terminal according to an exemplary embodiment of this invention is shown in which a horizontally-long moving image (depicted by A in the figure) having a horizontal length longer than a vertical length is displayed on a vertically-long display unit having a vertical length longer than a horizontal length. Specifically, the information processing terminal shown in the figure is a mobile phone. Fig. 2A shows a normal display mode. As shown in Fig. 2B, in case where the horizontally-long moving image is displayed on the vertically-long display unit in a maximum-size display mode, the moving image is rotated by 90 degrees and then displayed in the maximum-size display mode. Hereinbelow, this function of the information processing terminal according to this invention will be described as a first example.

Further, in a successive display mode in case where vertically-long moving images and horizontally-long moving images are mixed, it is possible according to another exemplary embodiment of this invention to display the vertically-long moving images in succession or display the horizontally-long moving images in succession. Hereinbelow, this function will be described as a second example. By this function, a viewer need not frequently change a holding position of the display unit from a vertical position to a horizontal position and vice versa. Thus, a troublesome operation is not required.

Referring to Fig. 3, a mobile phone as an information communication terminal according to the first example of this invention comprises a radio transmitter/receiver 10 having an antenna 100. The radio transmitter/receiver 10 is realized by the digital communication techniques, such as PDC (Personal Digital Cellular), GSM (Global System for Mobile Communications), WCDMA (Wideband Code Division Multiple Access), wireless LAN (Local Area Network), and WiMAX (Worldwide Interoperability for Microwave Access), which are adopted by a mobile phone system and provides a function of transmitting/receiving voice and digital data. Especially in this invention, the radio transmitter/receiver 10 receives streaming data of a moving image.

A download function portion 20 has a function of downloading moving image data through the radio transmitter/receiver 10 and storing the data as a downloaded moving image in a moving image storage function portion 30. Generally, the moving image is often constructed by a format compressed by the technique, such as mpeg (Moving Picture Experts Group) 2, mpeg4, or H.264.

The moving image storage function portion 30 comprises a memory for storing the downloaded moving image in a moving image storing area and is realized, for example, by a large-capacity flash memory having a capacity of 512 MB or more.

A controlling portion 40 comprises a general-purpose CPU (Central Processing Unit) and controls each component of the mobile phone.

An input unit 50 comprises a numeric keypad or the like and serves to enter or input an operation by a user.

A display unit 60 is formed by an LCD (Liquid Crystal Display), an organic EL (electroluminescence) display, or the like and displays the downloaded moving images and so on.

A size acquiring function portion 70 has a function of acquiring a vertical length and a horizontal length of the moving image stored in the moving image storage function portion 30.

A vertical/horizontal converting function portion 80 rotates the moving image by 90 degrees for display of the moving image.

A moving image display function portion 90 makes the display unit 60 display, in a maximum-size display mode, the moving image stored in the moving image storage function portion 30 or the moving image converted by the vertical/horizontal converting function portion 80.

The size acquiring function portion 70, the vertical/horizontal converting function portion 80, and the moving image display function portion 90 are realized by, for example, a software program operated in the controlling portion 40. Alternatively, the size acquiring function portion 70, the vertical/horizontal converting function portion 80, and the moving image display function portion 90 may be realized by a dedicated moving image processor which is not shown in the figure.

Referring to Fig. 4, an operation of the example shown in Fig. 3 will be described.

When an instruction to reproduce the moving image is issued by an operator by using the input unit 50, the controlling portion 40 starts streaming moving image reproduction and controls each component as follows in accordance with the flow chart in Fig. 4.

The download function portion 20 downloads, as a downloaded moving image, streaming data of the moving image specified by a URL (Uniform Resource Locator) or the like (step S11).

The size acquiring function portion 70 acquires a vertical size and a horizontal size of the moving image from the downloaded moving image (step S12).

The controlling portion 40 judges whether or not the horizontal size of the moving image is greater than the vertical size (step S13).

In case where the horizontal size of the moving image is greater than the vertical size, the moving image is subjected to vertical/horizontal conversion by the vertical/horizontal converting function portion 80 (step S14). The vertical/horizontal conversion is carried out by rotating the moving image by 90 degrees,

In case where the horizontal size of the moving image is smaller than the vertical size, it is appropriate to directly display the moving image without carrying out the vertical/horizontal conversion.

The moving image display function portion 90 carries out maximization or the like so that the moving image matches a size of the display unit 60, further carries out any other necessary processing, and displays the moving image on the display unit 60.

By this example, it is possible to display the moving image in a maximum-size display mode in a good condition without requiring the operator to be conscious of a difference in vertical and horizontal sizes between the moving image and the display unit 60.

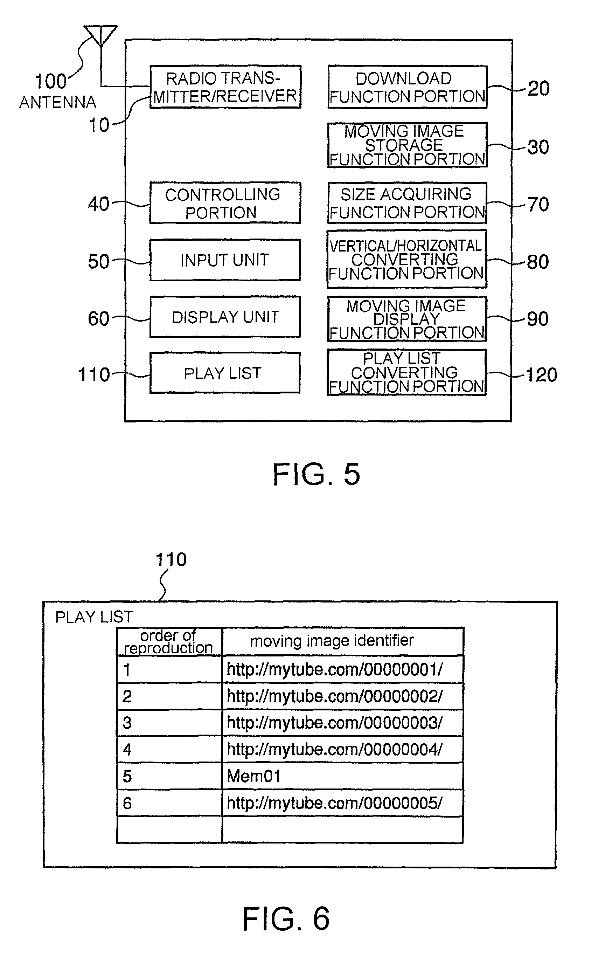

Next, referring to Fig. 5, description will be made about a mobile phone as an information communication terminal according to the second example of this invention.

The information communication terminal shown in Fig. 5 is similar in basic structure to the example illustrated in Fig. 3 but is different from Fig. 3 in that a play list 110 and a play list converting function portion 120 are further provided.

The play list 110 is arranged in another area in the memory and, as shown in Fig. 6, controls the order of reproduction of a plurality of moving images and identifiers of the moving images to be reproduced.

The play list converting function portion 120 is a function portion for converting the order of reproduction in the play list and is realized, for example, by a software program in the controlling portion 40.

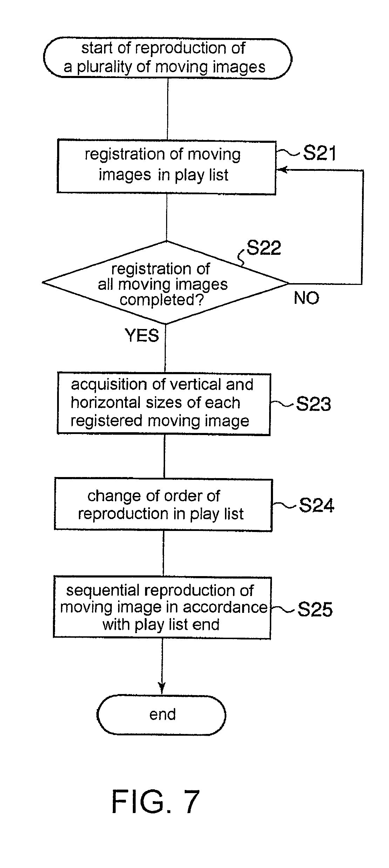

Next, referring to Fig. 7, an operation (reproducing operation of a plurality of moving images) of the example shown in Fig. 5 will be described.

By using the input unit 50 of the terminal, a user registers in the play list 110 a plurality of moving images desired to be reproduced (step S21).

As shown in Fig. 6, the play list 110 stores the identifiers of the moving images specified by the user. For example, the identifiers may be URLs for streaming. Further, the identifier may be a stored memory address of the moving image which has already been stored in the moving image storing area in the memory or channel information of a broadcast program of digital terrestrial broadcasting and so on.

In a step S22, it is judged through a user input that registration of the moving images in the play list is completed. Then, the controlling portion 40 acquires vertical and horizontal sizes of all the moving images registered in the play list 110 (step S23).

Herein, a method of acquiring the vertical and the horizontal sizes of the moving image will be described.

First, description will be made about a method of acquiring data of the vertical and the horizontal sizes of the moving image in the streaming.

In the streaming, downloaded data is sequentially reproduced before downloading of all data is completed. First, downloading of streaming moving image data is started. Header information of a leading part of the data which has been downloaded is acquired. Next, vertical and horizontal sizes recorded in the header information are acquired. Since subsequent streaming data need not be acquired as long as the header information is acquired, downloading is stopped or interrupted.

Secondly, description will be made about a method of acquiring the vertical and the horizontal sizes in case where the moving images are stored in the moving image storing area of the memory.

In this case, the header information is acquired from the memory area where the moving images are stored. Next, the vertical and the horizontal sizes recorded in the header information are acquired.

Thirdly, a method of acquiring the vertical and the horizontal sizes in case of television broadcasting will be described in the following. The television broadcasting assumes that the vertical and the horizontal sizes are fixed. Therefore, if the television broadcasting is included in the play list, predetermined fixed vertical and horizontal sizes are acquired.

In Fig. 5, the play list converting function portion 120 changes the order of display in the play list 110 on the basis of the vertical and the horizontal sizes acquired for each of the moving images (step S24 in Fig. 7).

For example, the order of display is changed so that moving images each having a horizontal size greater than a vertical size are collectively reproduced first and thereafter moving images each having a horizontal size smaller than a vertical size are collectively reproduced. Alternatively and reversely, the moving images each having a horizontal size smaller than a vertical size may be collectively reproduced first.

After the order of reproduction of the moving images in the play list 110 is changed, the controlling portion 40 carries out reproduction in accordance with the order (step S25 in Fig. 7).

The reproduction processing is similar to that shown in Fig. 4.

Thus, even in case where the moving images are displayed in a maximum-size display mode, setting of the information processing terminal need not be frequently changed and viewing in a good condition can be achieved. Specifically, a viewer need not frequently change a holding position of the display unit from a vertical position to a horizontal position and vice versa. Thus, a troublesome operation is not required.

This invention is also applicable to an information communication terminal other than the mobile phone.

While the invention has been particularly shown and described with reference to exemplary embodiments thereof, the invention is not limited to these embodiments. It will be understood by those of ordinary skill in the art that various changes in form and details may be made therein without departing from the sprit and scope of this invention as defined by the claims.

According to one embodiment there is provided: An information communication terminal has a download function portion (20) for downloading a moving image as a downloaded moving image, a size acquiring function portion (70) for acquiring vertical and horizontal sizes of the downloaded moving image, a controlling portion (40) for determining whether or not the downloaded moving image is subjected to vertical/horizontal conversion on the basis of the vertical and the horizontal sizes which have been acquired, a vertical/horizontal converting function portion (80) for vertical/horizontal converting the downloaded moving image to obtain a vertical/horizontal converted moving image in case where it is determined to carry out the vertical/horizontal conversion, and a moving image display function portion (90) for displaying the vertical/horizontal converted moving image on a display unit (60) in case where it is determined to carry out the vertical/horizontal conversion and displaying the downloaded moving image on the display unit (60) in case where it is determined not to carry out the vertical/horizontal conversion.

## Claims

1. An information communication terminal having a display unit, the information communication terminal comprising:
downloading means for downloading a moving image as a downloaded moving image;
size acquiring means for acquiring vertical and horizontal sizes of the downloaded moving image;
determining means for determining whether or not the downloaded moving image is to be subjected to vertical/horizontal conversion on the basis of the vertical and the horizontal sizes acquired by the size acquiring means;
vertical/horizontal conversion means for carrying out the vertical/horizontal conversion of the downloaded moving image to obtain a vertical/horizontal converted image in case where the determining means determines that the vertical/horizontal conversion is to be carried out; and
moving image display means for displaying the vertical/horizontal converted image on the display unit in case where the determining means determines that the vertical/horizontal conversion is to be carried out and displaying the downloaded moving image on the display unit in case where the determining means determines that the vertical/horizontal conversion is not to be carried out.

2. The information communication terminal as claimed in claim 1, wherein the vertical/horizontal conversion of the downloaded moving image is carried out by rotating the downloaded moving image by 90 degrees.

3. The information communication terminal as claimed in claim 1, or 2, wherein, if the determining means determines that the vertical/horizontal conversion is not to be carried out, the moving image display means displays the downloaded moving image on the display unit after the downloaded moving image is subjected to maximization so as to match a size of the display unit and, if the determining means determines that the vertical/horizontal conversion is to be carried out, the moving image display means displays the vertical/horizontal converted moving image on the display unit after the vertical/horizontal converted moving image is subjected to the maximization so as to match the size of the display unit.

4. The information communication terminal as claimed in one of claims 1 to 3, the display unit having a vertical length longer than a horizontal length, wherein:
the determining means determines that the vertical/horizontal conversion of the downloaded moving image is to be carried out in case where the downloaded moving image has a horizontal size greater than a vertical size and determines that the vertical/horizontal conversion of the downloaded moving image is not to be carried out in case where the downloaded moving image has a horizontal size not greater than a vertical size.

5. The information communication terminal as claimed in claim 4, wherein the vertical/horizontal conversion of the downloaded moving image is carried out by rotating the downloaded moving image by 90 degrees.

6. The information communication terminal as claimed in claim 4, wherein, if the determining means determines that the vertical/horizontal conversion is not to be carried out, the moving image display means displays the downloaded moving image on the display unit after the downloaded moving image is subjected to maximization processing so as to match a size of-the display unit and, if the determining means determines that the vertical/horizontal conversion is to be carried out, the moving image display means displays the vertical/horizontal converted moving image on the display unit after the vertical/horizontal converted moving image is subjected to the maximization so as to match the size of the display unit.

7. The information communication terminal as claimed in one of claims 1 to 6 further comprising:
memorizing means for memorizing, as a play list, a plurality of identification data for identifying a plurality of moving images and the order of reproduction of the moving images in correspondence to the identification data; and
play list converting means for converting the order of reproduction of the moving images memorized in correspondence to the identification data on the basis of the vertical and the horizontal sizes of the moving images identified by the identification data memorized in the play list.

8. The information communication terminal as claimed in one of claims 1 to 7, wherein the play list converting means comprises:
means for acquiring the vertical and the horizontal sizes of the moving images identified by the identification data memorized in the play list; and
means for converting the order of reproduction of the moving images memorized in the memorizing means in correspondence to the identification data on the basis of the vertical and the horizontal sizes acquired for the moving images.

9. The information communication terminal as claimed in claim 7 or 8 , wherein the play list converting means carries out conversion of the order so that moving images each having a horizontal size greater than a vertical size are collectively reproduced first and thereafter moving images each having a horizontal size not greater than a vertical size are collectively reproduced.

10. The information communication terminal as claimed in one of claims 7 to 9, wherein the play list converting means carries out the conversion of the order so that moving images each having a horizontal size not greater than a vertical size are collectively reproduced first and thereafter moving images each having a horizontal size greater than a vertical size are collectively reproduced.
